# EUROPEAN PATENT APPLICATION

(11) **EP 2 178 243 A1**
(43) Date of publication of application: **21.04.2010**
(21) Application number: 08748573.6
(22) Date of filing: 15.05.2008
(51) Int. Cl.: H04L 12/14

(54) **CHARGING METHOD, SYSTEM, EQUIPMENT AND MESSAGE PROCESSING EQUIPMENT**

(30) Priority: 09.08.2007 CN 200710075711
(71) Applicant: Huawei Technologies Co., Ltd., Longgang District, Shenzhen Guangdong 518129 (CN)
(72) Inventor: SHAN, Mingjun, Shenzhen, Guangdong 518129 (CN); KANG, Jiao, Shenzhen, Guangdong 518129 (CN); LI, Chun, Shenzhen, Guangdong 518129 (CN); SHI, Xin, Shenzhen, Guangdong 518129 (CN)
(74) Representative: Epping - Hermann - Fischer
(86) International application number: PCT/CN2008/070967
(87) International publication number: WO 2009/018730

(57) **Abstract**

The present disclosure relates to the communications field, and in particular, to a charging method, a charging system, a charging apparatus, and a message processing apparatus. Charging is performed according to information about the network resources used by a receiver at the time of receiving a message, and therefore charging is more precise, diversified and flexible. The charging method includes: obtaining information about the network resource usage of a receiver and performing charging according to the information about the network resource usage of the receiver. In addition, a charging system, a charging apparatus, and a message processing apparatus are disclosed.

## Description

### Field of the Invention

The present disclosure relates to the communications field, and in particular, to a charging method, a charging system, a charging apparatus, and a message processing apparatus.

### Background of the Invention

The message service is one of the data services widely applied in mobile communications. The message service provides a method for sending a message from one entity to another. Currently, message services include: Short Message Service (SMS), Multimedia Message Service (MMS), Instant Message (IM) service, and Push-to-Talk over Cellular (PoC) service. In a communication network, an independent service engine needs to be set for each type of message services based on the corresponding technical specifications. Through the independent service engine, the corresponding message service may be provided for users to bring different user experiences.

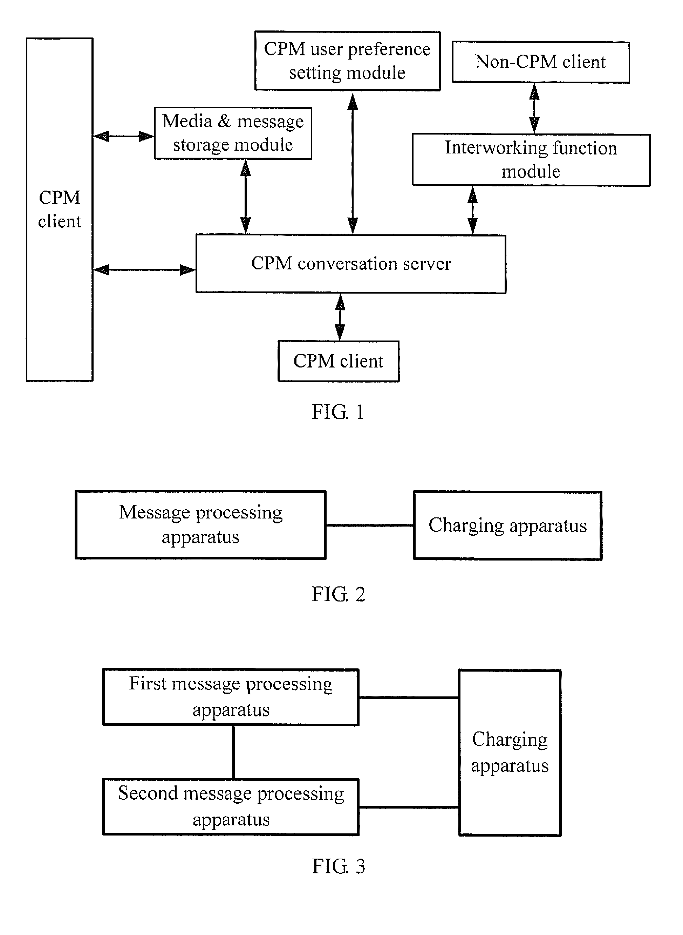

To provide consistent experiences for users in terms of message services, the Converged IP Message (CPM) group of the Open Mobile Alliance (OMA) puts forward a converged message service. This service enables the communication with the existing message services to maximize the interworking between different message-service users. When sending a message, the sender does not need to know the message service type (such as SMS, MMS, IM, and PoC) used by the receiver, and the CPM system may determine the most suitable message service type used by the receiver according to the current state (carried in the information such as registration information and presence information) of the receiver. FIG. 1 shows the basic framework of the CPM system, in which the CPM client sends a message to other clients in the following two modes:

Mode I. The CPM client sends a message to other clients in ordinary mode. Specifically, the CPM client directly sends the message to a CPM client in the home domain or other domains through a CPM conversation server of the home domain, or sends the message to a non-CPM client through an interworking function module. The CPM conversation server judges the message service type used by the receiver according to the CPM user preference. The interworking function module performs protocol or message conversion between CPM and non-CPM (such as SMS, MMS, IM, and PoC), that is, converts the CPM protocol or message into a non-CPM protocol or message, and vice versa.

Mode II. The CPM client sends a message to other clients in store-and-forward mode. Specifically, the CPM client may store the content that needs to be sent on the network beforehand, for example, on the media & message storage module. When the content stored on the network needs to be forwarded, the message sent to the CPM conversation server may carry a Uniform Resource Locator (URL). The CPM conversation server obtains the content that needs to be forwarded on the network according to the URL of a media resource, and combines the content newly added on the CPM client with the content to be forwarded into a new message. The CPM conversation server sends the new message to another CPM client directly, or sends the new message to a non-CPM client through an interworking function module. Another method is: The CPM client sends a message that carries the URL of the media resource to the media & message storage module. The media & message storage module searches for the content that needs to be forwarded according to the URL of the media resource, and combines the content newly added on the CPM client and the content that needs to be forwarded into a new message. The media & message storage module sends the URL of the combined message to the CPM client, and the CPM client sends the URL of the combined message to the CPM conversation server. The CPM conversation server obtains the message from the media & message storage module according to the URL of the combined message, and sends the message to another CPM client directly, or sends the message to a non-CPM client through the interworking function module.

### Summary of the Invention

Therefore, a charging method is required.

Based on the conception of the foregoing charging method, a charging system is provided.

Based on the conception of the foregoing charging method, another charging system is provided.

Moreover, a charging apparatus and a message processing apparatus are provided.

A charging method includes:
obtaining information about the network resource usage of a receiver; and
performing charging according to the information about the network resource usage of the receiver.

A charging system includes:
a message processing apparatus, adapted to: receive a message from a sender, judge information about the network resource usage of a receiver according to the message, and send a charging request to a charging apparatus, where the charging request carries the information about the network resource usage of the receiver; and
the charging apparatus, adapted to perform charging according to the information about the network resource usage of the receiver.

A charging system includes:
a first message processing apparatus, adapted to: receive a message from a sender, judge information about message media combination according to the message, and send a first charging request to a charging apparatus, where the first charging request carries the information about message media combination;
a second message processing apparatus, adapted to: judge a message service type used by a receiver, and send a second charging request to the charging apparatus, where the second charging request carries the message service type used by the receiver; and
the charging apparatus, adapted to perform charging according to the information about message media combination and/or the message service type used by the receiver.

A charging apparatus includes:
an obtaining unit, adapted to obtain information about the network resource usage of a receiver; and
a charging unit, adapted to perform charging according to the information about the network resource usage of the receiver.

A message processing apparatus includes:
a receiving unit, adapted to receive a message from a sender;
a judging unit, adapted to judge information about the network resource usage of a receiver according to the message; and
a sending unit, adapted to send a charging request to a charging apparatus, where the charging request carries the information about the network resource usage of the receiver.

A charging system includes a charging apparatus according to any one of claims 19-11, and message processing apparatus according to any one of claims 12-15.

Through the technical solution under the present disclosure, the information about the network resource usage of the receiver is obtained, and is used as a basis for charging. Therefore, the charging is performed differently for different network resources used by the receiver when the receiver receives a message, and the charging is more precise, diversified, and flexible.

### Brief Description of the Drawings

FIG. 1 shows a basic framework of a CPM system in the prior art;
FIG. 2 shows a structure of a charging system in an embodiment of the present disclosure;
FIG. 3 shows a structure of a charging system in another embodiment of the present disclosure;
FIG. 4 is a flowchart of a charging method in an embodiment of the present disclosure;
FIG. 5 is a flowchart of a charging method in another embodiment of the present disclosure;
FIG. 6 shows a structure of a CPM charging system in an embodiment of the present disclosure;
FIG. 7 is a charging sequence diagram in a first embodiment of the present disclosure;
FIG. 8 is a charging sequence diagram in a second embodiment of the present disclosure;
FIG. 9 is a charging sequence diagram in a third embodiment of the present disclosure;
FIG. 10 is a charging sequence diagram in a fourth embodiment of the present disclosure;
FIG. 11 is a charging sequence diagram in a fifth embodiment of the present disclosure;
FIG. 12 is a charging sequence diagram in a sixth embodiment of the present disclosure;
FIG. 13 is a charging sequence diagram in a seventh embodiment of the present disclosure;
FIG. 14 is a charging sequence diagram in an eighth embodiment of the present disclosure;
FIG. 15 is a charging sequence diagram in a ninth embodiment of the present disclosure;
FIG. 16 shows a structure of a charging apparatus in an embodiment of the present disclosure; and
FIG. 17 shows a structure of a message processing apparatus in an embodiment of the present disclosure.

### Detailed Description of the Invention

As shown in FIG. 2, a charging system in an embodiment of the present disclosure includes a message processing apparatus and a charging apparatus.

The message processing apparatus is adapted to receive a message from a sender, judge information about the network resource usage of a receiver according to the message, and send a charging request to the charging apparatus, where the charging request carries the information about the network resource usage of the receiver.

The charging apparatus is adapted to perform charging according to the information about the network resource usage of the receiver. Specifically, the charging apparatus may perform rating for the communication according to the information about the network resource usage of the receiver and the charging policy. According to the rating result, the charging apparatus authenticates a user account, and deducts an expense from the user account. The charging policy may be preset in the charging apparatus, or generated by the charging apparatus dynamically, or obtained by the charging apparatus from another network element. The user account may be a sender account, a receiver account, or a third-party account. Further, the charging apparatus may return a charging response to the message processing apparatus according to the charging result.

The information about the network resource usage of the receiver includes but is not limited to: message service type used by the receiver, and/or information about message media combination. The message service type used by the receiver includes but is not limited to SMS, MMS, IM, PoC, and CPM. Specifically, the message processing apparatus may judge the message service type used by the receiver according to the service presence information or subscription information of the receiver, the message service type used by the receiver and set by the receiver, or the message route information. Further, the service presence information or subscription information of the receiver, or the information set by the receiver about the message service type used by the receiver may be stored in the message processing apparatus beforehand, or stored in another network element or database. After receiving the message, the message processing apparatus obtains the foregoing information from the message processing apparatus itself, or another network element or database according to the receiver ID in the message, and judges the message service type used by the receiver. Moreover, the message processing apparatus may judge the message service type used by the receiver according to the message route information carried in the message.

The information about message media combination includes but is not limited to: message media combination mode, message media type, and message media size, or any combination thereof. The message media combination modes include: combining the media directly on the terminal of a sender, and/or combining the media stored on the network. The type of the message media includes: type of the message media combined directly on the terminal of the sender, and/or type of the message media combined on the network. The size of the message media includes: size of the message media combined directly on the terminal of the sender, and/or size of the message media combined on the network. Specifically, the message processing apparatus may judge the message media combination mode according to whether the received message carries the newly added message content and/or the address ID such as a URL of the media resource stored on the network. If the message processing apparatus determines that the received message carries the newly added message content, the message may be obtained by combining the media directly on the terminal of a sender; if the message processing apparatus determines that the received message carries the address ID of the media resource stored on the network, the message may be obtained by combining the media stored on the network. Further, the message processing apparatus may judge the type of the media directly combined on the terminal of the sender and/or the size of the message media according to the media type and/or media size of the message content newly added in the message, and judge the type and/or size of the message media combined on the network according to the media type and/or media size of the message content which is stored, forwarded and obtained from the network according to the address ID.

Further, the message processing apparatus is further adapted to: judge the message service type used by the sender, and report the message service type used by the sender to the charging apparatus. The charging apparatus further performs charging according to the message service type used by the sender and the information about the network resource usage of the receiver. The message service type used by the sender includes but is not limited to SMS, MMS, IM, PoC, and CPM. Specifically, the message processing apparatus may judge the message service type used by the sender according to the protocol of the received message. For example, the message processing apparatus may judge whether the message service type used by the sender is SMS according to whether the protocol of the received message is a Short Message Peer to Peer (SMPP) protocol, or judge the message service type used by the sender according to the feature tag in the received message, or judge the message service type used by the sender according to the route information of the message.

As shown in FIG. 3, a charging system in an embodiment of the present disclosure includes a first message processing apparatus, a second message processing apparatus, and a charging apparatus.

The first message processing apparatus is adapted to: receive a message from a sender, judge information about message media combination according to the message, and send a first charging request to the charging apparatus, where the first charging request carries the information about message media combination. The information about message media combination includes but is not limited to: message media combination mode, message media type, and message media size, or any combination thereof. The method employed by the first message processing apparatus to judge the information about message media combination is detailed in the foregoing embodiment, and is not described further.

The second message processing apparatus is adapted to: judge the message service type used by the receiver according to the message and send a second charging request to the charging apparatus, where the second charging request carries the message service type used by the receiver. The method employed by the second message processing apparatus to judge the message service type used by the receiver is detailed in the foregoing embodiment, and is not described further.

The charging apparatus is adapted to perform charging according to the information about message media combination in the first charging request and/or the message service type used by the receiver in the second charging request. Specifically, the charging apparatus may perform rating for the communication according to the information about message media combination and/or the message service type used by the receiver as well as the charging policy. According to the rating result, the charging apparatus authenticates the user account, and deducts an expense from the user account. The charging policy may be preset in the charging apparatus, or generated by the charging apparatus dynamically, or obtained by the charging apparatus from another network element. The user account may be a sender account, a receiver account, or a third-party account. Further, the charging apparatus may return a charging response to the first message processing apparatus and/or the second message processing apparatus according to the charging result.

Further, the first charging request or the second charging request may carry a charging ID. The charging apparatus may associate the first charging request with the second charging request according to the charging IDs.

Further, the first charging request may carry other charging-related information. The charging-related information includes the quantity of receivers and role of each receiver. The charging apparatus may perform charging according to the information about message media combination in the first charging request, other charging-related information, and/or the message service type used by the receiver in the second charging request.

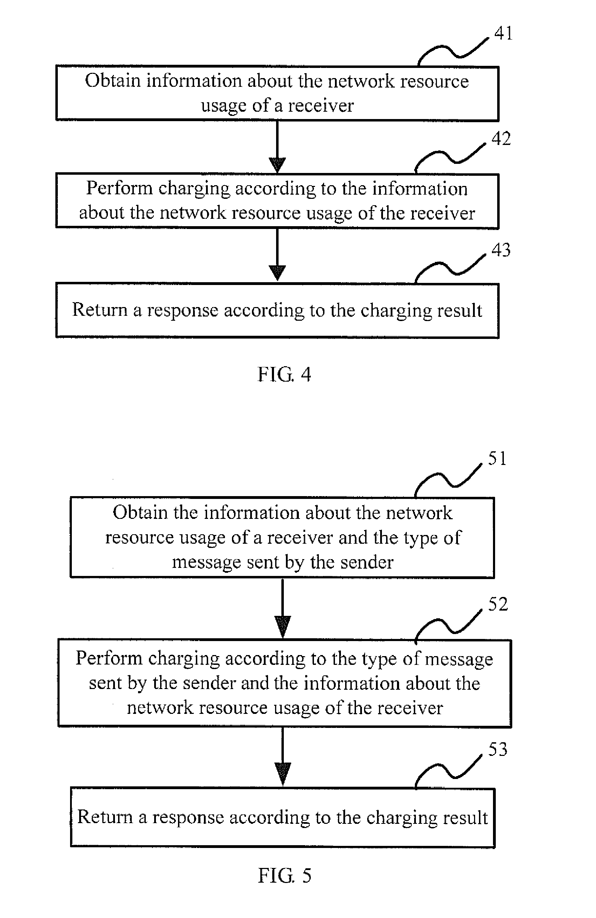

FIG. 4 is a flowchart of a charging method in an embodiment of the present disclosure. The charging method includes:
Step 41: Obtain the information about the network resource usage of a receiver. Specifically, the message processing apparatus sends the information about the network resource usage of the receiver to the charging apparatus, and the charging apparatus receives the information about the network resource usage of the receiver.
Step 42: Perform charging according to the information about the network resource usage of the receiver. Specifically, the charging apparatus may perform rating for the communication according to the information about the network resource usage of the receiver and the charging policy. According to the rating result, the charging apparatus authenticates the user account, and deducts an expense from the user account. The charging policy may be preset in the charging apparatus, or generated by the charging apparatus dynamically, or obtained by the charging apparatus from another network element. The user account may be a sender account, a receiver account, or a third-party account.

Further, this embodiment may include step 43, in which a response is sent according to the charging result. Specifically, the charging apparatus may return a charging response to the message processing apparatus according to the charging result.

The information about the network resource usage of the receiver includes but is not limited to: message service type used by the receiver, and/or information about combination of message media of the receiver. The message service type used by the receiver includes but is not limited to SMS, MMS, IM, PoC, and CPM.

The information about message media combination includes but is not limited to: message media combination mode, message media type, and message media size, or any combination thereof. Further, the media types of message contents include but are not limited to: video media, audio media, and static media (such as text media).

The message media combination modes include: combining the media directly on the terminal of a sender, and/or combining the media stored on the network.

The type of the message media includes: type of the message media combined directly on the terminal of the sender, and/or type of the message media combined on the network; the size of the message media includes: size of the message media combined directly on the terminal of the sender, and/or size of the message media combined on the network.

FIG. 5 is a flowchart of a charging method in an embodiment of the present disclosure. The charging method includes the following steps:
Step 51: Obtain the information about the network resource usage of a receiver and the message service type used by the sender. The message service type used by the sender includes but is not limited to SMS, MMS, IM, PoC, and CPM.
Step 52: Perform charging according to the message service type used by the sender and the information about the network resource usage of the receiver. Specifically, the charging apparatus may perform rating for the communication according to the information about the network resource usage of the receiver, the message service type used by the sender, and the preset charging policy. According to the rating result, the charging apparatus authenticates the user account, and deducts an expense from the user account. The user account may be a sender account, a receiver account, or a third-party account. Further, the charging apparatus may return a charging response to the first message processing apparatus and/or the second message processing apparatus according to the charging result.

Further, this embodiment may include step 53, in which a response is sent according to the charging result.

To further clarify the technical solution under the present disclosure, the following details a CPM system provided in an embodiment of the present.

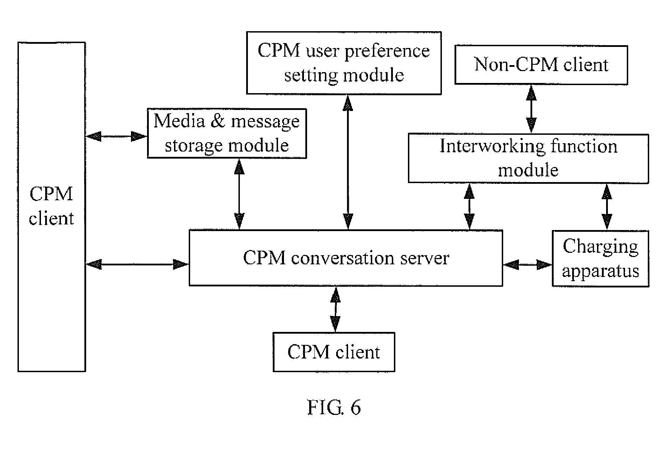

FIG. 6 shows a structure of a CPM charging system in an embodiment of the present disclosure.

The CPM client is adapted to: receive or send a CPM message, or send or receive a CPM session. Further, the CPM client may send or receive a message or session through a Session Initiation Protocol (SIP). The CPM conversation server is adapted to: receive the CPM message and the CPM session, and route the message or CPM session to the CPM client of the home domain or another domain, or send the message to a non-CPM client through an interworking function module. The CPM conversation server may send the received message to another CPM client directly, or obtain from the network (such as a media & message storage module) a message that needs to be sent by the sender according to the URL in the received message. The obtained message is combined with the newly added message to be sent by the sender into a CPM message. In addition, the CPM conversation server may judge the information about the network resource usage of the receiver, for example, message service type used by the receiver, and/or information about message media combination, and interact with the charging apparatus to report the determined information about the network resource usage of the receiver to the charging apparatus. Further, the CPM conversation server may judge the information about the network resource usage of the receiver according to the preference setting of the receiver, or the service presence information or subscription information of the receiver, or the information set by the receiver about the message service type used by the receiver, or route information of the message, or the media type and size of the message content. For example, the CPM conversation server judges the message service type used by the receiver according to the preference setting of the receiver, or the service presence information or subscription information of the receiver, or the information set by the receiver about the message service type used by the receiver, or route information of the message; and judges the information about message media combination according to the media type and size of the message content. The interworking function module is adapted to: perform the gateway function between the CPM service and the non-CPM service, and convert a CPM message into a non-CPM message and route the message to a non-CPM domain, or convert a non-CPM message into a CPM message. Further, the interworking function module may interact with the charging apparatus to judge the message service type used by the receiver and report the type to the charging apparatus. Further, the interworking function module may judge the message service type used by the receiver according to the preference setting of the receiver, or the service presence information or subscription information of the receiver, or the information set by the receiver about the message service type used by the receiver, or the message route information, or the media type of the message content. The preference setting of the receiver, or the service presence information or subscription information of the receiver, or the information set by the receiver about the message service type used by the receiver may be stored in a CPM user preference setting module or in another network element or database. The charging apparatus performs charging according to the reported information about the network resource usage of the receiver, and returns a charging response to the CPM conversation server and/or the interworking function module.

On the basis of the foregoing embodiment of the CPM charging system, the technical solution under the present disclosure is further described below through specific embodiments. In the following embodiments, the CPM client may be a CPM User Equipment (UE), which communicates with other UEs through a SIP message or sets up a session connection with other UEs through a SIP INVITE message and then sends the specific message contents to other UEs through the session connection.

### First Embodiment

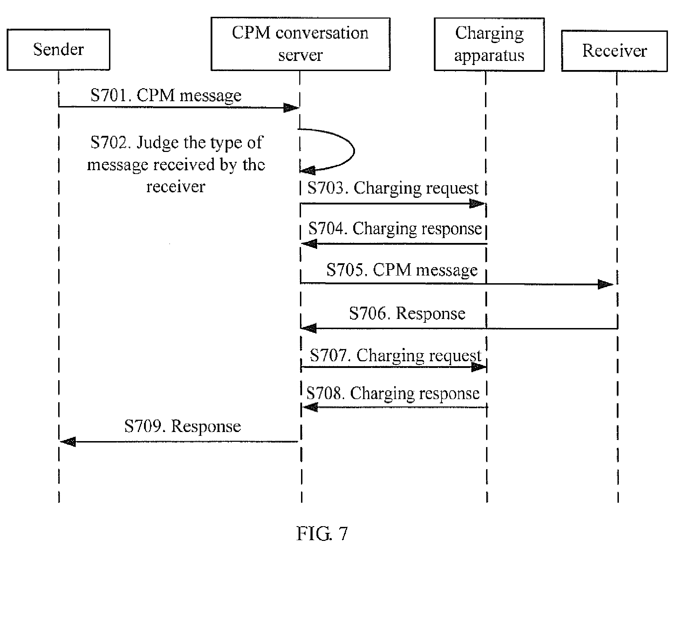

In this embodiment, a sender sends a message to a receiver. The sender is a CPM UE, and the receiver is a CPM UE. The sender sends a CPM message to the receiver. The message service type used by the receiver is CPM, and the message service type used by the receiver is judged by the CPM conversation server, and reported to the charging apparatus directly. As shown in FIG. 7, the process of the method includes the following steps:
Step S701: The sender sends a CPM message to the receiver. This message is submitted to the CPM conversation server first.
Step S702: After receiving the message, the CPM conversation server judges the message service type used by the receiver. Specifically, the CPM conversation server may judge the message service type used by the receiver according to the service presence information or subscription information of the receiver, the information set by the receiver about the message service type used by the receiver, or the message route information. In this embodiment, the CPM conversation server determines that the message service type used by the receiver is CPM. Further, the CPM conversation server may judge the message service type used by the sender. Specifically, the CPM conversation server may judge the message service type used by the sender according to the protocol of the received message. For example, the CPM conversation server may judge whether the message service type used by the sender is SMS according to whether the protocol of the received message is SMPP, or judge the message service type used by the sender according to the feature tag in the received message, or judge the message service type used by the sender according to the route information of the message. In this embodiment, the CPM conversation server determines that the message service type used by the sender is CPM.
Step S703: The CPM conversation server sends a charging request such as a Credit Control Request (CCR) to the charging apparatus, requesting the charging apparatus to perform charging. The charging request carries the message service type used by the receiver, and may further carry the message service type used by the sender. In this embodiment, the message service type used by the sender and the message service type used by the receiver are CPM.
Step S704: The charging apparatus performs rating according to the received charging request, and returns a charging response such as a Credit Control Answer (CCA) to the CPM conversation server. After receiving the charging request, the charging apparatus performs rating for the communication according to the message service type used by the receiver and the message service type used by the sender in the charging request. In this embodiment, the charging apparatus calculates the expenses incurred for the CPM message sent by the sender and the CPM message used by the receiver. The charging apparatus judges whether the balance of the user account is sufficient for this communication. If the balance is sufficient, the charging apparatus returns a charging response to the CPM conversation server, indicating that the balance of the user account is sufficient and that the message sent by the sender needs to be forwarded to the receiver, and the process proceeds to step S705. If the balance is insufficient, the charging apparatus tells the CPM conversation server that the balance of the user account is insufficient, and the communication is ended. In this embodiment, the user account may be a sender account, a receiver account, or a third-party account.
Step S705: The CPM conversation server sends the message to the receiver.
Step S706: The receiver returns a response to the CPM conversation server. After receiving the message, the receiver returns a response to the CPM conversation server, indicating that the message is received.
Step S707: The CPM conversation server sends a charging request such as a CCR to the charging apparatus, requesting the charging apparatus to deduct an expense from the sender account.
Step S708: The charging apparatus deducts an expense from the user account according to the rating result, and returns a charging response to the CPM conversation server, indicating deduction success.
Step S709: The CPM conversation server sends a response to the sender, indicating that the message is sent to the receiver successfully. The process is ended.

In this embodiment, the CPM conversation server communicates with the charging apparatus twice (steps S703-S704 and steps S707-S708) to complete rating and expense deduction for this communication separately. It should be noted that in this embodiment, the CPM conversation server may communicate with the charging apparatus only once. That is, steps S703-S704 and steps S707-S708 are not simultaneously required. For example, in step S704 of this embodiment, after receiving a charging request from the CPM conversation server, the charging apparatus performs rating for this communication according to the message service type used by the sender and/or the message service type used by the receiver in the charging request, and judges whether the balance of the user account is sufficient for this communication. If the balance is sufficient, the charging apparatus deducts an expense from the user account. In this way, both rating and expense deduction are performed in step S704 at the same time, and it is not necessary to perform steps S707-S708. For another example, in this embodiment, step S703 and step S704 are not required. That is, after receiving the message from the sender, the CPM conversation server does not request the charging apparatus to perform rating, but forwards the message to the receiver directly. After receiving a response from the receiver, the CPM conversation server sends a charging request to the charging apparatus in step S707. The charging request carries the message service type used by the sender and/or the message service type used by the receiver in this communication. In step S708, the charging apparatus performs rating and charging for the communication according to the message service type used by the sender and/or the message service type used by the receiver in the charging request. Besides, the technical solution provided in this embodiment is also applicable to offline charging. That is, the charging process does not affect the message service. Offline charging is a technology well known to those skilled in the art, and therefore, no embodiment of applying the technical solution under the present disclosure to offline charging is provided here.

### Second Embodiment

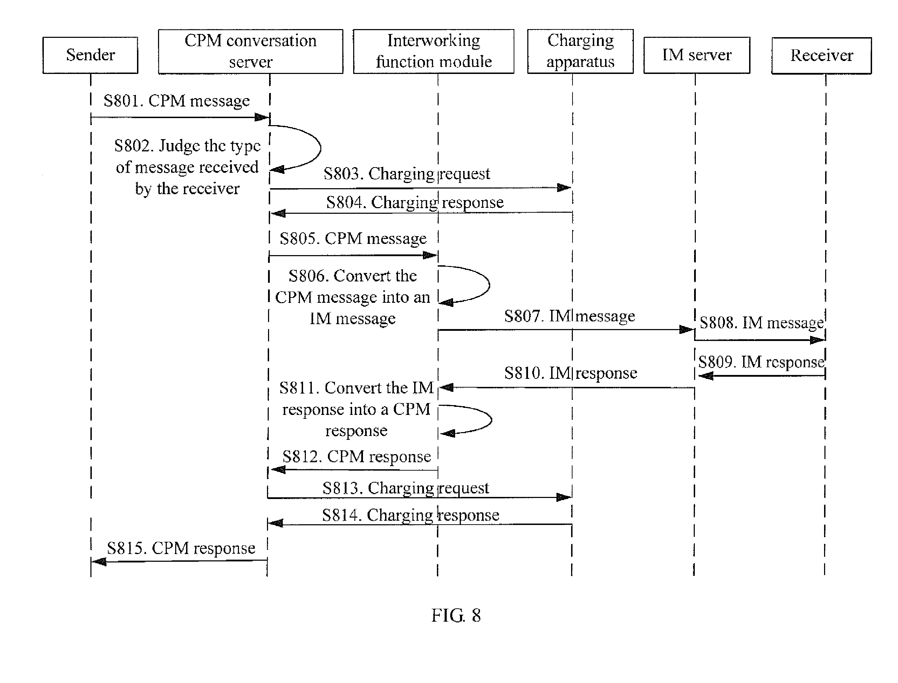

In this embodiment, the sender sends a message to a receiver. The sender is a CPM UE, and the receiver is an IM UE. The sender sends a CPM message to the receiver. The message service type used by the receiver is IM, and the message service type used by the receiver is judged by the CPM conversation server, and reported to the charging apparatus directly. As shown in FIG. 8, the process of the method includes the following steps:
Step S801: The sender sends a CPM message to the receiver. This message is submitted to the CPM conversation server first.
Step S802: After receiving the message, the CPM conversation server judges the message service type used by the receiver. In this embodiment, the CPM conversation server determines that the message service type used by the receiver is IM. Further, the CPM conversation server may judge the message service type used by the sender. In this embodiment, the CPM conversation server determines that the message service type used by the sender is CPM.
Step S803: The CPM conversation server sends a charging request such as a CCR to the charging apparatus, requesting the charging apparatus to perform charging. The charging request carries the message service type used by the receiver, and may further carry the message service type used by the sender. In this embodiment, the message service type used by the sender is CPM, and the message service type used by the receiver is IM.
Step S804: The charging apparatus performs rating according to the received charging request, and returns a charging response to the CPM conversation server. After receiving the charging request, the charging apparatus performs rating for the communication according to the message service type used by the receiver and/or the message service type used by the sender in the charging request. In this embodiment, the charging apparatus calculates the expenses incurred for the CPM message sent by the sender and the IM message used by the receiver. The charging apparatus judges whether the balance of the user account is sufficient for this communication. If the balance is sufficient, the charging apparatus returns a charging response such as a CCA to the CPM conversation server, indicating that the balance of the user account is sufficient and that the message sent by the sender needs to be forwarded to the receiver, and the process proceeds to step S805. If the balance is insufficient, the charging apparatus tells the CPM conversation server that the balance of the user account is insufficient, and the communication is ended. In this embodiment, the user account may be a sender account, a receiver account, or a third-party account.
Step S805: The CPM conversation server sends the CPM message to the interworking function module.
Step S806: The interworking function module converts the CPM message into an IM message.
Step S807: The interworking function module sends the IM message to the IM server.
Step S808: The IM server sends the IM message to the receiver.
Step S809: The receiver returns an IM response to the IM server. After receiving the message, the receiver returns an IM response to the IM server, indicating that the message is received.
Step S810: The IM server forwards the IM response to the interworking function module.
Step S811: The interworking function module converts the IM response into a CPM response.
Step S812: The interworking function module sends the CPM response to the CPM conversation server.
Step S813: The CPM conversation server sends a charging request to the charging apparatus, requesting the charging apparatus to deduct an expense.
Step S814: The charging apparatus deducts an expense from the user account according to the rating result, and returns a charging response to the CPM conversation server, indicating deduction success.
Step S815: The CPM conversation server sends a CPM response to the sender, indicating that the message is sent to the receiver successfully. The process is ended.

In this embodiment, the CPM conversation server communicates with the charging apparatus twice (steps S803-S804 and steps S813-5814) to complete rating and expense deduction for this communication separately. It should be noted that in this embodiment, the CPM conversation server may communicate with the charging apparatus only once. That is, steps S803-S804 and steps S807-S808 are not simultaneously required. For example, in step S804 of this embodiment, after receiving a charging request from the CPM conversation server, the charging apparatus performs rating for this communication according to the message service type used by the sender and the message service type used by the receiver in the charging request, and judges whether the balance of the user account is sufficient for this communication. If the balance is sufficient, the charging apparatus deducts an expense from the user account. In this way, both rating and expense deduction are performed in step S804 at the same time, and it is not necessary to perform steps S807-S808. For another example, in this embodiment, step S803 and step S804 are not required. That is, after receiving the message from the sender, the CPM conversation server does not request the charging apparatus to perform rating, but forwards the message to the receiver directly. After receiving a response from the receiver, the CPM conversation server sends a charging request to the charging apparatus in step S813. The charging request carries the message service type used by the sender and/or the message service type used by the receiver in this communication. In step S814, the charging apparatus performs rating and expense deduction for the communication according to the message service type used by the sender and/or the message service type used by the receiver in the charging request. Besides, the technical solution provided in this embodiment is also applicable to offline charging. That is, the charging process does not affect the message service. Offline charging is a technology well known to those skilled in the art, and therefore, no embodiment of applying the technical solution under the present disclosure to offline charging is provided here.

### Third Embodiment

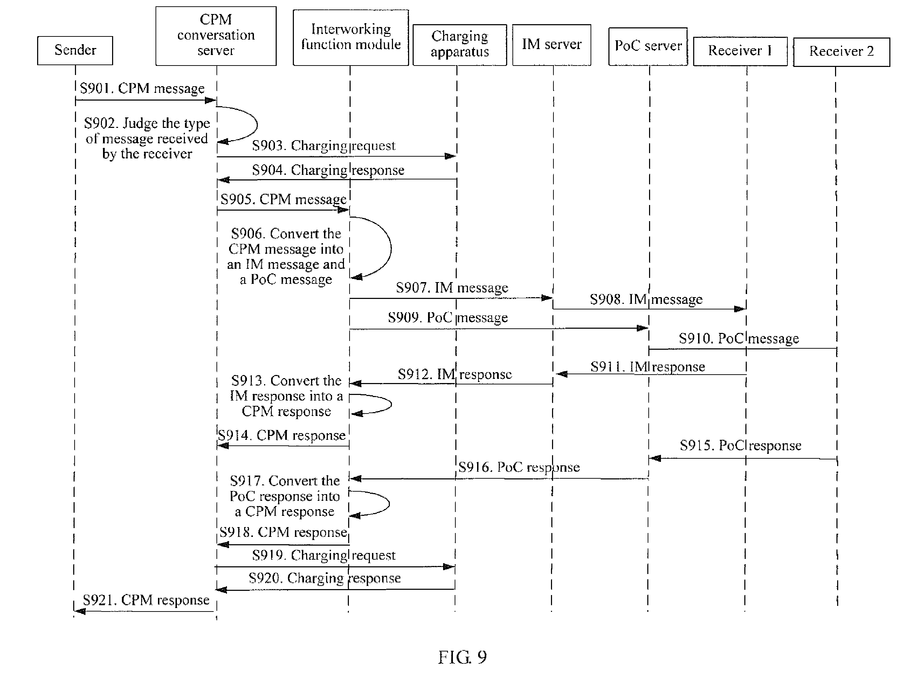

In this embodiment, the sender sends a group message to multiple receivers, for example, two receivers. The sender is a CPM UE; one receiver is an IM UE, and the other receiver is a PoC UE. The sender sends a CPM message to the receivers. The types of messages used by the receivers are IM and PoC respectively, and the types of messages used by the receivers are judged by the CPM conversation server, and reported to the charging apparatus directly. As shown in FIG. 9, the process of the method includes the following steps:
Step S901: The sender sends a CPM message to the receivers, namely, to an IM UE and a PoC UE. This message is submitted to the CPM conversation server first.
Step S902: After receiving the message, the CPM conversation server judges the types of messages used by the receivers. In this embodiment, the CPM conversation server determines that the types of messages used by the receivers are IM and PoC respectively. Further, the CPM conversation server may judge the message service type used by the sender. In this embodiment, the CPM conversation server determines that the message service type used by the sender is CPM.
Step S903: The CPM conversation server sends a charging request (such as a CCR) to the charging apparatus. The charging request carries the types of messages used by the receivers, and may further carry the message service type used by the sender. In this embodiment, the message service type used by the sender is CPM, and the types of messages used by the receivers are IM and PoC respectively.
Step S904: The charging apparatus performs rating according to the received charging request, and returns a charging response to the CPM conversation server. After receiving the charging request, the charging apparatus performs rating for the communication according to the types of messages used by the receivers and/or the message service type used by the sender in the charging request. In this embodiment, the charging apparatus calculates the expenses incurred for the CPM message sent by the sender and the IM and PoC messages used by the receivers separately. The charging apparatus judges whether the balance of the user account is sufficient for this communication. If the balance is sufficient, the charging apparatus returns a charging response such as a CCA to the CPM conversation server, indicating that the balance of the user account is sufficient and that the message sent by the sender needs to be forwarded to the receivers, and the process proceeds to step S905. If the balance is insufficient, the charging apparatus tells the CPM conversation server that the balance of the user account is insufficient, and the communication is ended. In this embodiment, the user account may be a sender account, a receiver account, or a third-party account.
Step S905: The CPM conversation server sends the CPM message to the interworking function module.
Step S906: The interworking function module converts the CPM message into an IM message and a POC message each.
Step S907: The interworking function module sends the IM message to the IM server.
Step S908: The IM server sends the IM message to the first receiver.
Step S909: The interworking function module sends the PoC message to the PoC server.
Step S910: The PoC server sends the PoC message to the second receiver.
Step S911: The first receiver returns an IM response to the IM server. After receiving the message, the IM UE which serves as a receiver returns an IM response to the IM server, indicating that the message is received.
Step S912: The IM server forwards the IM response to the interworking function module.
Step S913: The interworking function module converts the IM response into a CPM response.
Step S914: The interworking function module sends the CPM response to the CPM conversation server.
Step S915: The second receiver returns a PoC response to the PoC server. After receiving the message, the PoC UE which serves as a receiver returns a PoC response to the PoC server, indicating that the message is received.
Step S916: The PoC server forwards the PoC response to the interworking function module.
Step S917: The interworking function module converts the PoC response into a CPM response.
Step S918: The interworking function module sends the CPM response to the CPM conversation server.
Step S919: The CPM conversation server sends a charging request to the charging apparatus.
Step S920: The charging apparatus deducts an expense from the user account according to the rating result, and returns a charging response to the CPM conversation server, indicating deduction success.
Step S921: The CPM conversation server sends a CPM response to the sender, indicating that the message is sent to the receiver successfully. The process is ended.

In this embodiment, the CPM conversation server communicates with the charging apparatus twice (steps S903-S904 and steps S913-S914) to complete rating and expense deduction for this message service separately. It should be noted that in this embodiment, the CPM conversation server may communicate with the charging apparatus only once. That is, steps S903-S904 and steps S918-S919 are not simultaneously required. The details are provided in the second embodiment, and are thus omitted in this embodiment and the subsequent embodiments.

### Fourth Embodiment

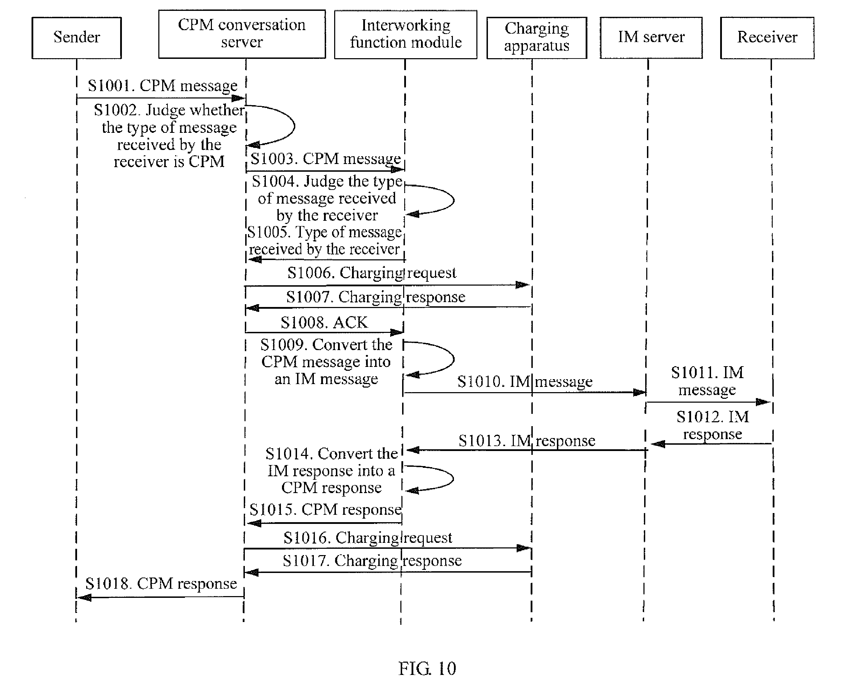

In this embodiment, the sender sends a message to one receiver. The sender is a CPM UE, and the receiver is an IM UE. The sender sends a CPM message to the receiver. The message service type used by the receiver is IM, and the message service type used by the receiver is judged by the interworking function module, and notified to the CPM conversation server, and is reported by the CPM conversation server to the charging apparatus. As shown in FIG. 10, the process of the method includes the following steps:
Step S1001: The sender sends a CPM message to the receiver. This message is submitted to the CPM conversation server first.
Step S1002: After receiving the message, the CPM conversation server judges whether the message service type used by the receiver is CPM. In this embodiment, the CPM conversation server determines that the message service type used by the receiver is not CPM. Further, the CPM conversation server may judge the message service type used by the sender. In this embodiment, the CPM conversation server determines that the message service type used by the sender is CPM.
Step S1003: The CPM conversation server sends the CPM message to the interworking function module.
Step S1004: The interworking function module judges the message service type used by the receiver. In this embodiment, the interworking function module determines that the message service type used by the receiver is IM.
Step S1005: The interworking function module sends the message service type used by the receiver to the CPM conversation server.
Step S1006: The CPM conversation server sends a charging request (such as a CCR) to the charging apparatus. The charging request carries the message service type used by the receiver, and may further carry the message service type used by the sender. In this embodiment, the message service type used by the sender is CPM, and the message service type used by the receiver is IM.
Step S1007: The charging apparatus performs rating according to the received charging request, and returns a charging response to the CPM conversation server. After receiving the charging request, the charging apparatus performs rating for the communication according to the message service type used by the receiver and/or the message service type used by the sender in the charging request. In this embodiment, the charging apparatus calculates the expenses incurred for the CPM message sent by the sender and the IM message used by the receiver. The charging apparatus judges whether the balance of the user account is sufficient for this communication. If the balance is sufficient, the charging apparatus returns a charging response such as a CCA to the CPM conversation server, indicating that the balance of the user account is sufficient and that the message sent by the sender needs to be forwarded to the receiver, and the process proceeds to step S1008. If the balance is insufficient, the charging apparatus tells the CPM conversation server that the balance of the user account is insufficient, and the communication is ended. In this embodiment, the user account may be a sender account, a receiver account, or a third-party account.
Step S1008: The CPM conversation server sends an ACK message to the interworking function module, instructing the interworking function module to forward the message to the receiver.
Steps 1009-1018 are the same as steps 806-815 in the second embodiment, and are not described further.

### Fifth Embodiment

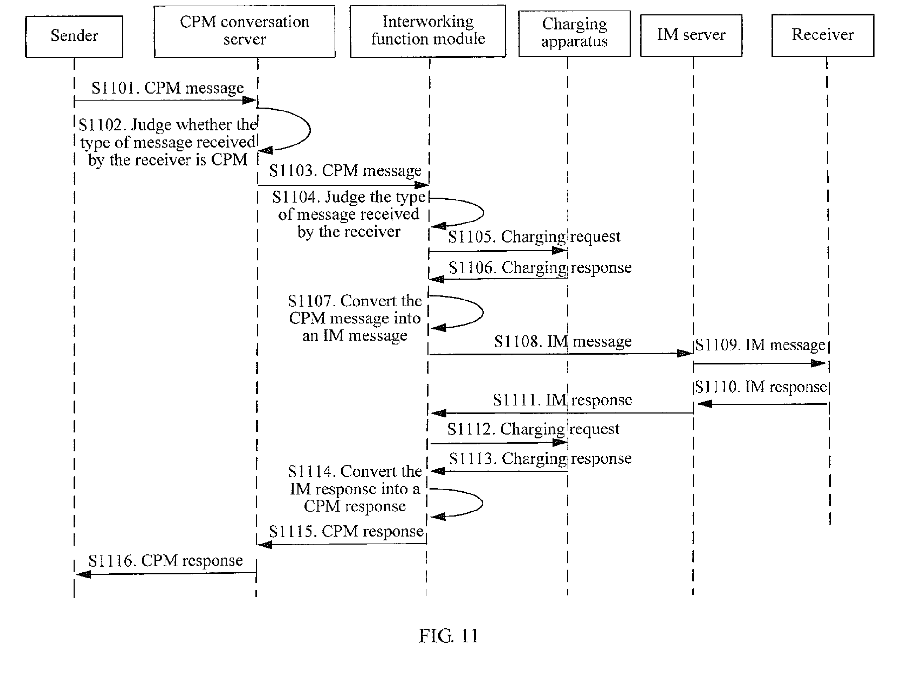

In this embodiment, the sender sends a message to a receiver. The sender is a CPM UE, and the receiver is an IM UE. The sender sends a CPM message to the receiver. The message service type used by the receiver is IM, and the message service type used by the receiver is judged by the interworking function module, and reported to the charging apparatus directly. As shown in FIG. 11, the process of the method includes the following steps:
Step S1101: The CPM UE sends a CPM message to the receiver. This message is submitted to the CPM conversation server first.
Step S1102: After receiving the message, the CPM conversation server judges whether the message service type used by the receiver is CPM. In this embodiment, the CPM conversation server determines that the message service type used by the receiver is not CPM. Further, the CPM conversation server may judge the message service type used by the sender. In this embodiment, the CPM conversation server determines that the message service type used by the sender is CPM.
Step S1103: The CPM conversation server sends the CPM message to the interworking function module.
Step S1104: The interworking function module judges the message service type used by the receiver. In this embodiment, the interworking function module determines that the message service type used by the receiver is IM.
Step S1105: The interworking function module sends a charging request (such as a CCR) to the charging apparatus. The charging request carries the message service type used by the receiver, and may further carry the message service type used by the sender. In this embodiment, the message service type used by the sender is CPM, and the message service type used by the receiver is IM.
Step S1106: The charging apparatus performs rating according to the received charging request, and returns a charging response to the interworking function module. After receiving the charging request, the charging apparatus performs rating for the communication according to the message service type used by the receiver and/or the message service type used by the sender in the charging request. In this embodiment, the charging apparatus calculates the expenses incurred for the CPM message sent by the sender and the IM message used by the receiver. The charging apparatus judges whether the balance of the user account is sufficient for this communication. If the balance is sufficient, the charging apparatus returns a charging response such as a CCA to the interworking function module, indicating that the balance of the user account is sufficient and that the message sent by the sender needs to be forwarded to the receiver, and the process proceeds to step S1107. If the balance is insufficient, the charging apparatus tells the interworking function module that the balance of the user account is insufficient, and the communication is ended. In this embodiment, the user account may be a sender account, a receiver account, or a third-party account.
Step S1107: The interworking function module converts the CPM message into an IM message.
Step S1108: The interworking function module sends the IM message to the IM server.
Step S1109: The IM server sends the IM message to the receiver.
Step S1110: The receiver returns an IM response to the IM server. After receiving the message, the receiver returns an IM response to the IM server, indicating that the message is received.
Step S1111: The IM server forwards the IM response to the interworking function module.
Step S1112: The interworking function module sends a charging request to the charging apparatus.
Step S1113: The charging apparatus deducts an expense from the user account according to the rating result, and returns a charging response to the interworking function module, indicating deduction success.
Step S1114: The interworking function module converts the IM response into a CPM response.
Step S1115: The interworking function module sends the CPM response to the CPM conversation server.
Step S1116: The CPM conversation server sends a CPM response to the sender, indicating that the message is sent to the receiver successfully. The process is ended.

### Sixth Embodiment

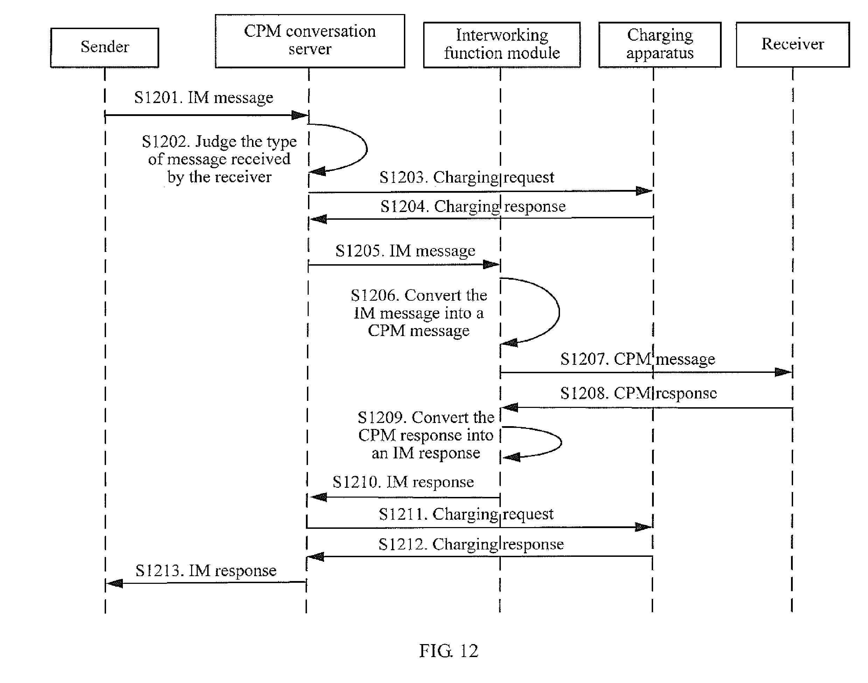

In this embodiment, the sender sends a message to a receiver. The sender is an IM UE, and the receiver is a CPM UE. The sender sends an IM message to the receiver. The message service type used by the receiver is CPM, and the message service type used by the receiver is judged by the CPM conversation server, and reported to the charging apparatus directly. As shown in FIG. 12, the process of the method includes the following steps:
Step S1201: The sender sends an IM message to the receiver. This message is submitted to the CPM conversation server first.
Step S1202: After receiving the message, the CPM conversation server judges the message service type used by the receiver. In this embodiment, the CPM conversation server determines that the message service type used by the receiver is CPM. Further, the CPM conversation server may judge the message service type used by the sender. In this embodiment, the CPM conversation server determines that the message service type used by the sender is IM.
Step S1203: The CPM conversation server sends a charging request (such as a CCR) to the charging apparatus. The charging request carries the message service type used by the sender and the message service type used by the receiver. In this embodiment, the message service type used by the sender is IM, and the message service type used by the receiver is CPM.
Step S1204: The charging apparatus performs rating according to the received charging request, and returns a charging response to the CPM conversation server. After receiving the charging request, the charging apparatus performs rating for the communication according to the message service type used by the receiver and/or the message service type used by the sender in the charging request. In this embodiment, the charging apparatus calculates the expenses incurred for the IM message sent by the sender and the CPM message used by the receiver. The charging apparatus judges whether the balance of the user account is sufficient for this communication. If the balance is sufficient, the charging apparatus returns a charging response such as a CCA to the CPM conversation server, indicating that the balance of the user account is sufficient and that the message sent by the sender needs to be forwarded to the receiver, and the process proceeds to step S1205. If the balance is insufficient, the charging apparatus tells the CPM conversation server that the balance of the user account is insufficient, and the communication is ended. In this embodiment, the user account may be a sender account, a receiver account, or a third-party account.
Step S1205: The CPM conversation server sends the IM message to the interworking function module.
Step S1206: The interworking function module converts the IM message into a CPM message.
Step S1207: The interworking function module sends the CPM message to the receiver.
Step S1208: The receiver returns a CPM response to the interworking function module. After receiving the message, the receiver returns a CPM response to the interworking function module, indicating that the message is received.
Step S1209: The interworking function module converts the CPM response into an IM response.
Step S1210: The interworking function module sends the IM response to the CPM conversation server.
Step S1211: The CPM conversation server sends a charging request to the charging apparatus.
Step S1212: The charging apparatus deducts an expense from the user account according to the rating result, and returns a charging response to the CPM conversation server, indicating deduction success.
Step S1213: The CPM conversation server sends an IM response to the sender, indicating that the message is sent to the receiver successfully. The process is ended.

### Seventh Embodiment

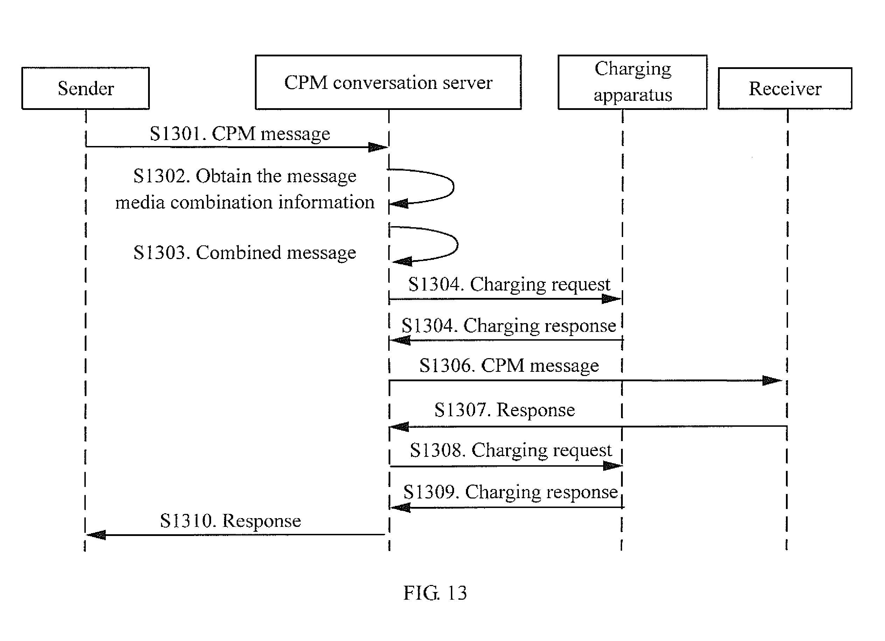

In this embodiment, the sender sends a message to a receiver. The message carries a message content newly added by the user and the URL of the message content stored on the media & message storage module. The sender is a CPM UE; the receiver is a CPM UE; the message service type used by the receiver is CPM; and the information about message media combination is obtained by the CPM conversation server and reported to the charging apparatus directly. In this embodiment, the information about message media combination includes: message media combination mode, message media type, and message media size. As shown in FIG. 13, the process of the method includes the following steps:
Step S1301: The sender sends a message to the receiver. This message carries a newly added content and a URL of the content to be forwarded, and is submitted to the CPM conversation server first.
Step S1302: After receiving the message, the CPM conversation server obtains the information about message media combination. In this embodiment, the CPM conversation server may judge the message media combination mode according to whether the message carries the newly added message content and the address ID such as a URL of the media resource stored on the network; the CPM conversation server may judge the type of the media combined directly on the terminal of the sender and/or the size of the message media according to the media type and/or media size of the message content newly added in the message; and the CPM conversation server may judge the type of the media combined on the network and/or the size of the message media according to the media type and/or media size of the message content which is stored, forwarded, and obtained from the network according to the address ID.
Step S1303: The CPM conversation server combines the newly added message content and the message content which is stored, forwarded, and obtained from the network into a CPM message. After receiving the message, the CPM conversation server obtains the stored and forwarded message content from the media & message storage module according to the URL in the message, combines the newly added message content with the stored message content, and encapsulates the combination into a new CPM message.
Step S1304: The CPM conversation server sends a charging request (such as a CCR) to the charging apparatus. The charging request carries the information about message media combination.
Step S1305: The charging apparatus performs rating according to the received charging request, and returns a charging response to the CPM conversation server. After receiving the charging request, the charging apparatus performs rating for the communication according to the information about message media combination in the charging request. In this embodiment, the charging apparatus calculates the expense for this communication according to the media type and the media size of the message content newly added in the charging request as well as the media type and the media size of the stored and forwarded message content. The charging apparatus judges whether the balance of the user account is sufficient for this communication. If the balance is sufficient, the charging apparatus returns a charging response such as a CCA to the CPM conversation server, indicating that the balance of the user account is sufficient and that the message sent by the sender needs to be forwarded to the receiver, and the process proceeds to step S1306. If the balance is insufficient, the charging apparatus tells the CPM conversation server that the balance of the user account is insufficient, and the communication is ended. In this embodiment, the user account may be a sender account, a receiver account, or a third-party account.
Step S1306: The CPM conversation server sends the combined CPM message to the receiver.
Step S1307: The receiver returns a response to the CPM conversation server. After receiving the message, the receiver returns a response to the CPM conversation server, indicating that the message is received.
Step S1308: The CPM conversation server sends a charging request to the charging apparatus.
Step S1309: The charging apparatus deducts an expense from the user account according to the rating result, and returns a charging response to the CPM conversation server, indicating deduction success.
Step S1310: The CPM conversation server sends a response to the sender, indicating that the message is sent to the receiver successfully. The process is ended.

### Eighth Embodiment

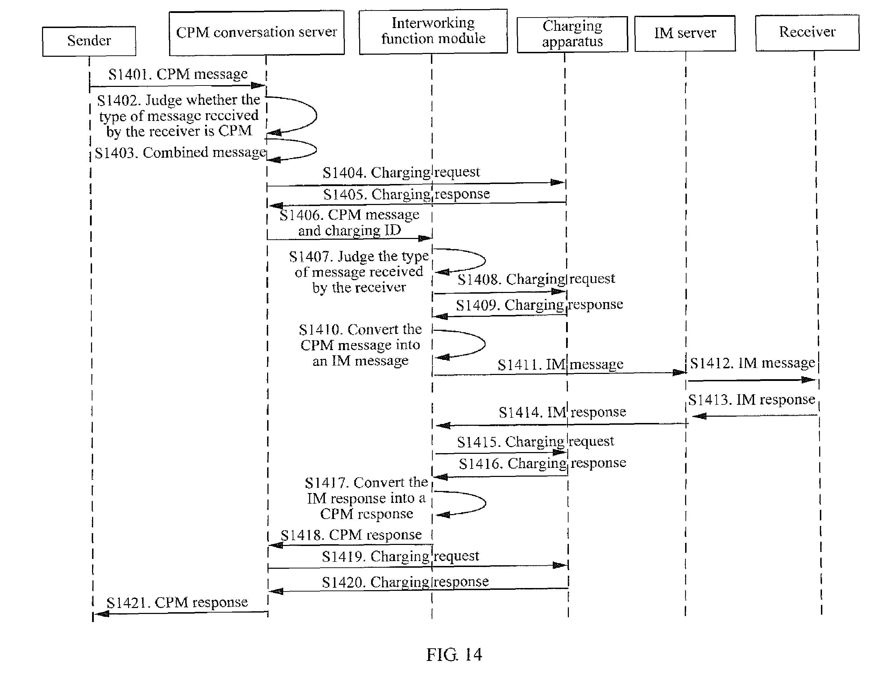

In this embodiment, the sender sends a message to a receiver. The message carries a message content newly added by the user and the URL of the message content stored on the media & message storage module. The sender is a CPM UE; the receiver is an IM UE; the message service type used by the receiver is IM; and the information about message media combination (in this embodiment, the information about message media combination includes: message media combination mode, message media type, and message media size) is obtained by the CPM conversation server and reported to the charging apparatus directly. The message service type used by the receiver is judged by the interworking function module and reported to the charging apparatus directly. A charging ID is used to associate the information reported by the CPM conversation server with the information reported by the interworking function module. As shown in FIG. 14, the process of the method includes the following steps:
Step S1401: The sender sends a message to the receiver. This message carries a newly added content and a URL of the content to be forwarded, and is submitted to the CPM conversation server first.
Step S1402: After receiving the message, the CPM conversation server obtains the information about message media combination and judges whether the message service type used by the receiver is CPM. In this embodiment, the CPM conversation server determines that the message service type used by the receiver is non-CPM, and judges the message media combination mode according to whether the message carries the newly added message content and the address ID such as a URL of the media resource stored on the network; the CPM conversation server judges the type of the media combined directly on the terminal of the sender and/or the size of the message media according to the media type and/or media size of the message content newly added in the message; and the CPM conversation server judges the type of the media combined on the network and/or the size of the message media according to the media type and/or media size of the message content which is stored, forwarded, and obtained from the network according to the address ID.
Step S1403: The CPM conversation server combines the newly added message content and the message content which is stored, forwarded, and obtained from the network into a CPM message. After receiving the message, the CPM conversation server obtains the stored and forwarded message content from the media & message storage module according to the URL in the message, combines the newly added message content with the stored and forwarded message content, and encapsulates the combination into a new CPM message.
Step S1404: The CPM conversation server sends a charging request (such as a CCR) to the charging apparatus. The charging request carries the information about message media combination.
Step S1405: The charging apparatus performs rating according to the received charging request, and returns a charging response to the CPM conversation server. After receiving the charging request, the charging apparatus performs rating for the communication according to the information about message media combination in the charging request. In this embodiment, the charging apparatus calculates the expense for this communication according to the media type and the media size of the message content newly added in the charging request as well as the media type and the media size of the stored and forwarded message content. The charging apparatus judges whether the balance of the user account is sufficient for this communication. If the balance is sufficient, the charging apparatus returns a charging response such as a CCA to the CPM conversation server, indicating that the balance of the user account is sufficient and that the message sent by the sender needs to be forwarded to the receiver, and the process proceeds to step S1406. If the balance is insufficient, the charging apparatus tells the CPM conversation server that the balance of the user account is insufficient, and the communication is ended. In this embodiment, the user account may be a sender account, a receiver account, or a third-party account.
Step S1406: The CPM conversation server sends the CPM message and the charging ID to the interworking function module.
Step S1407: The interworking function module judges the message service type used by the receiver. In this embodiment, the interworking function module determines that the message service type used by the receiver is IM.
Step S1408: The interworking function module sends a charging request (such as a CCR) to the charging apparatus. The charging request carries the message service type used by the receiver, and may further carry the message service type used by the sender. In this embodiment, the message service type used by the sender is CPM, and the message service type used by the receiver is IM.
Step S1409: The charging apparatus performs rating according to the received charging request, and returns a charging response to the interworking function module. After receiving the charging request, the charging apparatus performs rating for the communication according to the message service type used by the receiver and the message service type used by the sender in the charging request, and the charging information reported by the CPM conversation server and associated with the charging ID. In this embodiment, the charging apparatus calculates the expenses incurred for the CPM message sent by the sender and the IM message used by the receiver. The charging apparatus judges whether the balance of the user account is sufficient for this communication. If the balance is sufficient, the charging apparatus returns a charging response such as a CCA to the interworking function module, indicating that the balance of the user account is sufficient and that the message sent by the sender needs to be forwarded to the receiver, and the process proceeds to step S1410. If the balance is insufficient, the charging apparatus tells the interworking function module that the balance of the user account is insufficient, and the communication is ended. In this embodiment, the user account may be a sender account, a receiver account, or a third-party account.
Step S1410: The interworking function module converts the CPM message into an IM message.
Step S1411: The interworking function module sends the IM message to the IM server.
Step S1412: The IM server sends the IM message to the receiver.
Step S1413: The receiver returns an IM response to the IM server. After receiving the message, the receiver returns an IM response to the IM server, indicating that the message is received.
Step S1414: The IM server forwards the IM response to the interworking function module.
Step S1415: The interworking function module sends a charging request to the charging apparatus.
Step S1416: The charging apparatus deducts an expense from the user account according to the latest rating result, and returns a charging response to the interworking function module, indicating deduction success.
Step S1417: The interworking function module converts the IM response into a CPM response.
Step S1418: The interworking function module sends the CPM response to the CPM conversation server.
Step S1419: The CPM conversation server sends a charging request to the charging apparatus.
Step S1420: The charging apparatus deducts an expense from the user account according to the rating result obtained in step S1405, and returns a charging response to the CPM conversation server, indicating deduction success.
Step S1421: The CPM conversation server sends a CPM response to the sender, indicating that the message is sent to the receiver successfully. The process is ended.

It should be noted that in the eighth embodiment, the charging ID may be generated by the CPM conversation server, or generated by the charging apparatus and allocated to the CPM conversation server. Further, the charging ID may be a session ID or an ID generated for the special purpose of associating the charging information.

### Ninth Embodiment

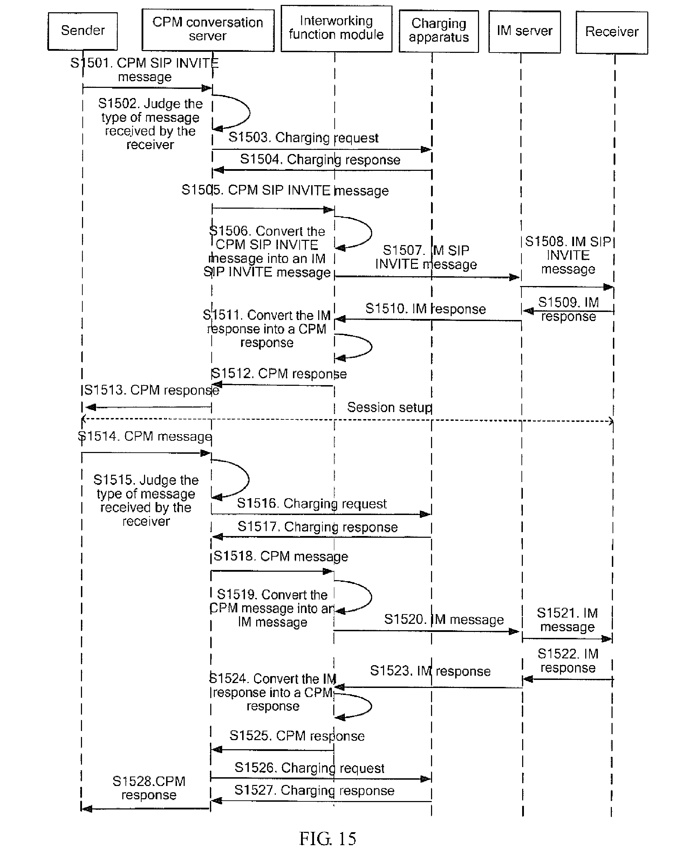

In this embodiment, the sender sets up a connection with the receiver first through a SIP INVITE message, and sends the specific message content to the receiver through this connection. The sender is a CPM UE, and the receiver is an IM UE. As shown in FIG. 15, the process of the method includes the following steps:
Step S1501: The sender sends a CPM SIP INVITE message to the receiver. This message is submitted to the CPM conversation server first.
Step S1502: After receiving the SIP INVITE message, the CPM conversation server judges the message service type used by the receiver. In this embodiment, the CPM conversation server determines that the message service type used by the receiver is IM. Further, the CPM conversation server may judge the message service type used by the sender. In this embodiment, the CPM conversation server determines that the message service type used by the sender is CPM.
Step S1503: The CPM conversation server sends a charging request (such as a CCR) to the charging apparatus. The charging request carries the message service type used by the sender and/or the message service type used by the receiver. In this embodiment, the message service type used by the sender is CPM, and the message service type used by the receiver is IM.
Step S1504: The charging apparatus performs rating according to the received charging request, and returns a charging response to the CPM conversation server. After receiving the charging request, the charging apparatus performs rating for the communication according to the message service type used by the receiver and/or the message service type used by the sender in the charging request. In this embodiment, the charging apparatus calculates the expense for the session connection that is set up after the sender sends the CPM SIP INVITE message and the receiver receives the IM SIP INVITE message. The charging apparatus judges whether the balance of the user account is sufficient for this communication. If the balance is sufficient, the charging apparatus returns a charging response such as a CCA to the CPM conversation server, indicating that the balance of the user account is sufficient and that the message sent by the sender needs to be forwarded to the receiver, and the process proceeds to step S1505. If the balance is insufficient, the charging apparatus tells the CPM conversation server that the balance of the user account is insufficient, and the communication is ended. In this embodiment, the user account may be a sender account, a receiver account, or a third-party account.
Step S1505: The CPM conversation server sends the CPM SIP INVITE message to the interworking function module, and tells the interworking function module that the message service type used by the receiver is IM.
Step S1506: The interworking function module converts the CPM SIP INVITE message into an IM SIP INVITE message.
Step S1507: The interworking function module sends the IM SIP INVITE message to the IM server.
Step S1508: The IM server sends the IM SIP INVITE message to the receiver.
Step S1509: The receiver returns an IM response to the IM server. After receiving the SIP INVITE message, the receiver returns an IM response to the IM server, indicating that the SIP INVITE message is received.
Step S1510: The IM server forwards the IM response to the interworking function module.
Step S1511: The interworking function module converts the IM response into a CPM response.
Step S1512: The interworking function module sends the CPM response to the CPM conversation server.
Step S1513: The CPM conversation server sends a CPM response to the sender, indicating that the SIP INVITE message is sent to the receiver successfully. A session connection is set up between the sender and the receiver.
Step S1514: The CPM UE sends a CPM message to the receiver through the session connection. This message is submitted to the CPM conversation server first.
Step S1515: After receiving the message, the CPM conversation server judges the message service type used by the receiver. In this embodiment, the CPM conversation server determines that the message service type used by the receiver is IM.
Step S1516: The CPM conversation server sends a charging request (such as a CCR) to the charging apparatus. The charging request carries the message service type used by the receiver, and may further carry the message service type used by the sender. In this embodiment, the message service type used by the sender is CPM, and the message service type used by the receiver is IM.
Step S1517: The charging apparatus performs rating according to the received charging request, and returns a charging response to the CPM conversation server. After receiving the charging request, the charging apparatus performs rating for this message according to the message service type used by the receiver and the message service type used by the sender. In this embodiment, the charging apparatus calculates the expenses incurred for the CPM message sent by the sender and the IM message used by the receiver. The charging apparatus judges whether the balance of the user account is sufficient for this communication. If the balance is sufficient, the charging apparatus returns a charging response such as a CCA to the CPM conversation server, indicating that the balance of the user account is sufficient and that the message sent by the sender needs to be forwarded to the receiver, and the process proceeds to step S1518. If the balance is insufficient, the charging apparatus tells the CPM conversation server that the balance of the user account is insufficient, and the communication is ended. In this embodiment, the user account may be a sender account, a receiver account, or a third-party account.
Step S1518: The CPM conversation server sends the CPM message to the interworking function module, and tells the interworking function module that the message service type used by the receiver is IM.
Step S1519: The interworking function module converts the CPM message into an IM message.
Step S1520: The interworking function module sends the IM message to the IM server.
Step S1521: The IM server sends the IM message to the receiver.
Step S1522: The receiver returns an IM response to the IM server. After receiving the message, the receiver returns an IM response to the IM server, indicating that the message is received.
Step S1523: The IM server forwards the IM response to the interworking function module.
Step S1524: The interworking function module converts the IM response into a CPM response.
Step S1525: The interworking function module sends the CPM response to the CPM conversation server.
Step S1526: The CPM conversation server sends a charging request to the charging apparatus.
Step S1527: The charging apparatus deducts an expense from the user account according to the rating result, and returns a charging response to the CPM conversation server, indicating deduction success.
Step S1528: The CPM conversation server sends a CPM response to the sender, indicating that the message is sent to the receiver successfully. The process is ended.

It should be noted that in step S1504 of the ninth embodiment, the charging response returned by the charging apparatus to the CPM conversation server may further carry a parameter which monitors the change of the message service type used by the session participant. This parameter instructs the CPM conversation server to report the updated type to the charging apparatus once the message service type used by the session participant is updated. Further, if the charging response returned by the charging apparatus to the CPM conversation server is a CCA message, the Trigger-Type field in the CCA message may be set to CHANGE_of_MESSAGING_SERVICES, which instructs the CPM conversation server to monitor the message service type used by the session participant and report the updated type to the charging apparatus once the type is updated.

It is understandable to those skilled in the art that all or part of the steps of the foregoing embodiments may be implemented by hardware instructed by a program. The program may be stored in a computer-readable storage medium. When being executed, the program performs the steps of the foregoing method embodiments. The storage medium may be any medium capable of storing program codes, for example, a Read-Only Memory (ROM), a Random Access Memory (RAM), a magnetic disk, and a compact disk.

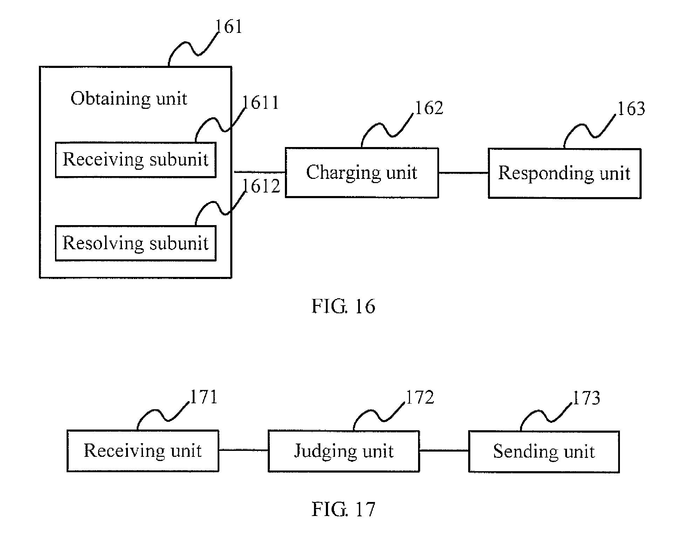

FIG. 16 shows a structure of a charging apparatus in an embodiment of the present disclosure. The charging apparatus includes an obtaining unit 161 and a charging unit 162.

The obtaining unit 161 is adapted to obtain information about the network resource usage of a receiver; and the charging unit 162 is adapted to perform charging according to the information about the network resource usage of the receiver. The information about the network resource usage of the receiver includes but is not limited to: message service type used by the receiver, and/or information about message media combination. The information about message media combination includes but is not limited to: message media combination mode, message media type, and message media size, or any combination thereof.

Further, the charging apparatus includes a responding unit 163, which is adapted to send a charging response according to the charging result.

Further, the obtaining unit 161 may include a receiving subunit 1611 and a resolving subunit 1612.

The receiving subunit 1611 is adapted to receive a charging request which carries the information about the network resource usage of the receiver.

The resolving subunit 1612 is adapted to resolve the charging request to obtain the information about the network resource usage of the receiver.

FIG. 17 shows a structure of a message processing apparatus in an embodiment of the present disclosure. The message processing apparatus includes:
a receiving unit 171, adapted to receive a message from a sender;
a judging unit 172, adapted to obtain information about the network resource usage of a receiver according to the message; and
a sending unit 173, adapted to send a charging request to a charging apparatus, where the charging request carries the information about the network resource usage of the receiver.

The information about the network resource usage of the receiver includes but is not limited to: message service type used by the receiver, and/or information about message media combination. The information about message media combination includes but is not limited to: message media combination mode, message media type, and message media size, or any combination thereof. Specifically, the judging unit 172 may obtain the service presence information or subscription information of the receiver or the message service type information used by the receiver set by the receiver according to the receiver ID in the message, and judge the message service type used by the receiver according to the obtained service presence information or subscription information of the receiver, or the message service type information used by the receiver set by the receiver. The judging unit 172 may also judge the message service type used by the receiver according to the message route information; and may judge the information about message media combination according to the newly added message content in the message and/or the media resource address ID carried in the message and stored on the network.

To sum up, through the technical solution under the present disclosure, the information about the network resource usage of the receiver is obtained, and is used as a basis for charging. Therefore, the charging is performed differently for different network resources used by the receiver when the receiver receives a message. Specifically, the charging is performed differently according to different types of messages used by the receiver, different modes of combining the message media, the message media type, and the message media size, thus improving the precision, diversity and flexibility of charging.

It is apparent that those skilled in the art may make modifications and variations to the present disclosure without departing from the spirit and scope of the present disclosure. The present disclosure is intended to cover the modifications and variations provided that they fall in the scope of protection defined by the following claims or their equivalents.

## Claims

1. A charging method, **characterized in** comprising:
obtaining information about the network resource usage of a receiver; and
performing charging according to the information about the network resource usage of the receiver.

2. The method of claim 1, **characterized in that** the obtaining information about the network resource usage of a receiver comprises:
sending, by a message processing apparatus, the information about the network resource usage of the receiver to a charging apparatus, and
receiving, by the charging apparatus, the information about the network resource usage of the receiver.

3. The method of claim 1, **characterized in that** the information about the network resource usage of the receiver comprises: a message service type used by a receiver and/or information about message media combination.

4. The method of claim 3, **characterized in that** the information about message media combination comprises: one or more of a message media combination mode, a message media type, and message media size.

5. The method of claim 4, **characterized in that**: the message media combination mode comprises: combining a media directly on the terminal of a sender, and/or combining a media stored on the network.

6. The method of claim 4, **characterized in that**:
the message media type comprises a type of the message media combined directly on the terminal of the sender, and/or type of the message media combined on the network; and
the size of the message media comprises size of the message media combined directly on the terminal of the sender, and/or size of the message media combined on the network.

7. The method of claim 1, **characterized in that** the method comprises: judging a message service type used by the sender, and
the method further comprises: performing charging according to the message service type used by the sender and the information about the network resource usage of the receiver.

8. The method of claim 3, **characterized in that** the message service type comprises:
Short Message Service, SMS, Multimedia Message Service, MMS, Instant Message, IM, Push-to-Talk over Cellular, PoC, and Converged IP Message, CPM.

9. The method of claim 1, **characterized in that** the method comprises:
sending, a response according to a charging result.

10. A charging system, **characterized in** comprising:
a message processing apparatus, adapted to receive a message from a sender, judge information about the network resource usage of a receiver according to the message,
and send a charging request to a charging apparatus, wherein the charging request carries the information about the network resource usage of the receiver; and
a charging apparatus, adapted to perform charging according to the information about the network resource usage of the receiver.

11. The system of claim 10, **characterized in** comprising:
the charging apparatus, adapted to return a charging response to the message processing apparatus according to a charging result.

12. The system of claim 10, **characterized in that** the information about the network resource usage of the receiver comprises: a message service type used by a receiver and/or information about message media combination.

13. The system of claim 11, **characterized in that** the information about message media combination comprises: one or more of a message media combination mode, a message media type, and message media size.

14. The system of claim 12, **characterized in** comprising:
the message processing apparatus, further adapted to:
obtain service presence information or subscription information of the receiver or
message service type information used by the receiver set by the receiver according to the receiver ID in the message; and
judge the message service type used by the receiver according to the obtained service presence information or subscription information of the receiver, or the message service type information used by the receiver set by the receiver.

15. The system of claim 12, **characterized in** comprising:
the message processing apparatus, adapted to judge the message service type used by the receiver according to message route information carried in the message.

16. The system of claim 12, **characterized in** comprising:
the message processing apparatus, adapted to judge the message media combination mode according to the newly added message content carried in the received message and/or the address ID of the media resource stored on the network.

17. The system of claim 10, **characterized in** comprising:
the message processing apparatus, further adapted to judge the message service type used by the sender and report the message service type used by the sender to the charging apparatus; and
the charging apparatus, further adapted to perform charging according to the message service type used by the sender and the information about the network resource usage of the receiver.

18. The system of claim 17, **characterized in** comprising:
the message processing apparatus, adapted to judge the message service type used by the sender according to protocol of the received message and/or route information of the message.

19. The system of claim 10, **characterized in** comprising:
the charging apparatus, adapted to return a charging response to the message processing apparatus according to a charging result.

20. A charging system, **characterized in** comprising:
a first message processing apparatus, adapted to receive a message from a sender, judge information about message media combination according to the message, and send a first charging request to a charging apparatus;
a second message processing apparatus, adapted to judge a message service type used by a receiver, and send a second charging request to the charging apparatus, where the second charging request carries the message service type used by the receiver;
and
a charging apparatus, adapted to perform charging according to the message service type used by the receiver.

21. The system of claim 20, **characterized in that** the first charging request or the second charging request comprises a charging ID;
and the charging apparatus is adapted to associate the first charging request with the second charging request according to the charging IDs.

22. The system of claim 20, **characterized in that** the information about message media combination comprises:
one or more of a message media combination mode, a message media type, and message media size.

23. The system of claim 20, **characterized in** comprising:
the charging apparatus, adapted to return a charging response to the first message processing apparatus and/or the second message processing apparatus according to a charging result.

24. The system of claim 20, **characterized in that**: the first charging request which is sent by the first message processing apparatus to the charging apparatus carries the information about message media combination; wherein the charging apparatus is adapted to perform charging according to the information about message media combination and/or the message service type used by the receiver.

25. A charging apparatus, **characterized in** comprising:
an obtaining unit, adapted to obtain information about the network resource usage of a receiver; and
a charging unit, adapted to perform charging according to the information about the network resource usage of the receiver.

26. The apparatus of claim 25, **characterized in that** the apparatus further comprises:
a sending unit, adapted to send a charging request to a charging apparatus, wherein the charging request carries the information about the network resource usage of the receiver.

27. The apparatus of claim 25, **characterized in that** the apparatus comprises:
a receiving subunit, adapted to receive a charging request which carries the information about the network resource usage of the receiver; and
a resolving subunit, adapted to resolve the charging request to obtain the information about the network resource usage of the receiver.

28. The apparatus of claim 25, **characterized in that** the information about the network resource usage of the receiver comprises:
a message service type used by a receiver and/or information about message media combination.

29. The apparatus of claim 25, **characterized in that** the information about message media combination comprises:
one or more of a message media combination mode, a message media type, and message media size.

30. A message processing apparatus, **characterized in** comprising:
a receiving unit, adapted to receive a message sent by a sender;
a judging unit, adapted to judge information about the network resource usage of a receiver according to the message; and
a sending unit, adapted to send a charging request to a charging apparatus, wherein the charging request carries the information about the network resource usage of the receiver.

31. The apparatus of claim 30, **characterized in that** the information about the network resource usage of the receiver comprises:
a message service type used by a receiver and/or information about message media combination.

32. The apparatus of claim 31, **characterized in that** the information about message media combination comprises:
one or more of a message media combination mode, a message media type, and message media size.

33. The apparatus of claim 31, **characterized in** comprising:
the judging unit, further adapted to:
obtain service presence information or subscription information of the receiver or the message service type used by the receiver set by the receiver according to the receiver ID in the message; and
judge the message service type used by the receiver according to the obtained service presence information or subscription information of the receiver, or the information set by the receiver about the type of message used by the receiver.

34. The apparatus of claim 31, **characterized in** comprising:
the judging unit, further adapted to judge the message service type used by the receiver according to message route information carried in the message.

35. The apparatus of claim 31, **characterized in** comprising:
the judging unit, further adapted to judge the message media combination mode according to the newly added message content carried in the received message and/or the address ID of the media resource stored on the network.
